# EUROPEAN PATENT SPECIFICATION

(11) **EP 0 323 969 B1**
(45) Date of publication and mention of the grant of the patent: **24.11.1993**
(21) Application number: 87906142.2
(22) Date of filing: 04.09.1987
(51) Int. Cl.: G11B 7/09

(54) **DUAL BEAM OPTICAL DATA SYSTEM**
OPTISCHES DATENSYSTEM MIT DOPPELBÜNDEL
SYSTEME OPTIQUE A DOUBLE FAISCEAU DE LECTURE ET D'ECRITURE DE DONNEES

(30) Priority: 15.09.1986 US 907956
(43) Date of publication of application: 19.07.1989
(73) Proprietor: DREXLER TECHNOLOGY CORPORATION, Mountain View, CA 94043 (US)
(72) Inventor: PIERCE, Gerald, A., Redwood City, CA 94061 (US); SCHAEFER, Louis, F., Palo Alto, CA 94306 (US); PEPPERS, Norman, A., Belmont, CA 94002 (US); MULLEN, William, F., San Bruno, CA 94066 (US)
(74) Representative: Purvis, William Michael Cameron
(86) International application number: PCT/US87/02219
(87) International publication number: WO 88/02169

(56) References cited:
- EP-A- 0 084 728
- FR-A- 2 575 568
- US-A- 3 946 367
- US-A- 4 034 403
- US-A- 4 272 651
- US-A- 4 334 299
- US-A- 4 425 636
- US-A- 4 530 080

## Description

The present invention relates to systems for reading and writing of data on optical data storage media.

Prior optical data reader-writers typically record by directing a scanning beam of laser light onto an optical data storage medium thereby producing spots representing bits of data. The spots have a reflectivity, transmissivity or other optical characteristic which contrasts with that of the background medium. Prior reader-writers typically read the data by directing a scanning beam of lower intensity laser light onto the medium, where it is deflected, scattered or transmitted by the spots to one or more photodetectors. Generally, the same laser is used for both writing and reading. Prerecorded marks may be present on the medium to allow the system to properly track, clock and focus on the spots.

Patent Specification US-A-4 360 728, US-A-4 500 777, US-A-4 542 288 and US-A-4 544 835 to Drexler disclose such data reading and writing systems for use with optical data storage media disposed on cards. Patent Specification US-A-4 284 716 to Drexler et al discloses one type of laser recordable medium suitable for such systems.

In Patent Specification US-A-4 290 122 to Bates et al, a first laser emits a beam for writing, while a second laser supplies a beam which is focused on a diffraction grating. The grating diffracts the beam to provide a plurality of essentially equal intensity, spaced apart read beams and a pair of radial tracking and focus control beams. The read beams illuminate different parallel data tracks which are read simultaneously by a detector array.

Prior optical data reader-writer systems are capable of storing data on optical storage media at a much greater density than magnetic systems and media. However, when reading this data the system is prone to error due to alignment problems between the laser light source, the data spot being read and the photodetector. Any misalignment may cause an error in the reading of data, necessitating error checking and correcting methods and circuitry. Typically, such error checking involves reading the data more than once to obtain a correct read, thereby reducing the overall speed of the system. The problem may be compounded by misalignment of multiple laser beams and detectors reading prerecorded marks for tracking, clocking or focusing at the same time as the data spots or plural tracks of data spots are read.

Patent Specification US-A-4 334 299 discloses a recording system in which a recording spot is formed as a pitted signal on a record surface by a writing beam. A reading beam is provided by a source separate from the recording source, is larger than the recording beam and follows a short distance behind it.

Patent Specification FR-A-2 575 568 discloses an optical recording medium on which information can be recorded and which can be read by a beam from a single source which is split by a diffraction grating to produce a set of three beams with each beam reading a particular track so that clocking, tracking and reading can be effected simultaneously.

According to the invention there is provided an optical data reading and writing system comprising,
a first light source provided for recording and comprising a laser capable of emitting a modulated laser beam.
a second light source provided for reading and emitting a second beam,
means for simultaneously directing and operating said modulated laser beam and said second beam onto an optical data storage medium having prerecorded information thereon, said laser beam recording data spots of a uniform size which is less than about ten micrometers, said prerecorded information and said data spots being organised into a plurality of tracks, and
means for reading said prerecorded information and recorded data spots from said medium
characterized in that said second beam has a width simultaneously illuminating at least two of the tracks and has an illuminating area substantially larger than the area illuminated by said laser beam.

In such an optical data reading and writing system, misalignment and error during reading of data can be reduced without reducing the speed of the system.

Thus a modulated laser beam can record data spots on a medium and a second independent light source with a second beam can illuminate a substantially larger area of the medium for simultaneously reading with a single beam both prerecorded information, such as servo track information, and data spots. The second light source is preferably an LED or light emitting diode. A photo-detector having a plurality of detector elements can read the prerecorded information and data spots from the illuminated area. Some of the detector elements can read data spots, each of these elements having an effective aperture such that the element receives light from and reads at most one data spot. More than one element may read a particular data spot. Other detector elements can read prerecorded information, such as track lines and clock marks, on the medium.

The data storage medium is typically disposed on a card. Data spots on the card are aligned in spaced apart parallel data paths. Track lines are parallel to the data paths for providing the tracking functions. Clock and data marks in the form of prerecorded spots may be disposed in the data paths. Preferably, more than one data path is located between adjacent pairs of track lines.

The system can reduce alignment problems because the illuminating beam is large and need not match up perfectly with the data spots and the detector. Further, multiple beams are not needed for reading data spots, track lines and clock marks, since the wide beam provides simultaneous illumination of both prerecorded information and data spots. An added advantage is that more than one data path can be illuminated and thus read at the same time, increasing the read speed by as much as fourfold.

The invention is diagrammatically illustrated by way of example in the accompanying drawings, in which:
Figure 1 is a plan view of a first embodiment of a system according to the invention;
Figure 2 is a plan view of a second embodiment of a system according to the invention;
Figure 3 is a top plan view of a data card used with the system of Figure 1;
Figure 4 is a sectional view taken on the line 4-4 in Figure 3;
Figures 5a, 5b and 5c are enlarged plan views of a small portion of the card in Figure 3;
Figure 6 is a plan view of a detector in the system of Figure 1 superimposed on a phantom image of the card of Figure 5a;
Figure 7 is a plan view of an alternate detector in the system of Figure 1 superimposed on a phantom image of the card of Figure 5b; and
Figure 8 is a plan view of the detector of Figure 7 superimposed on a phantom image of the card of Figure 5c.

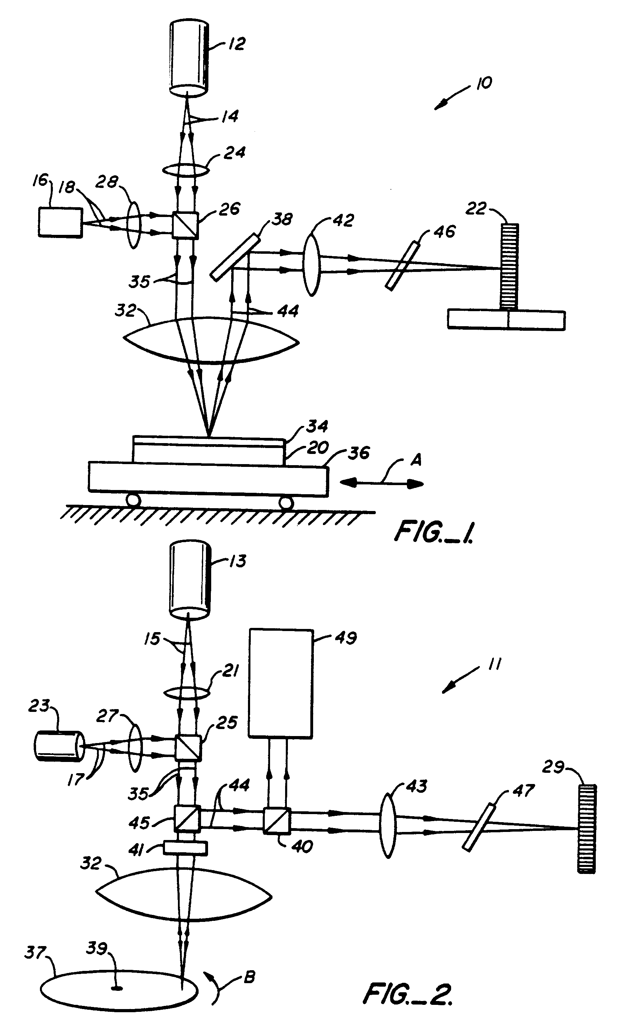

With reference to Figure 1, an optical data reading and writing system, in the present instance a data card reader-writer 10, comprises a laser 12 capable of emitting a modulated laser beam 14, a second light source 16 emitting a second beam 18, optical elements for directing the beams 14 and 18 to an optical storage medium, here disposed on a card 20, and at least one detector 22 for reading data on the card 20.

The laser 12 is used only for writing data spots on the card 20 and during data reading is kept below the threshold for writing on the medium. The beam 14 should, when writing, deliver sufficient laser pulse energy to the surface of the recording material to create spots. Typically, 5-20 milliwatts is required, depending on the recording material. A 20 milliwatt semiconductor laser, focused to a five micron beam size, records at temperatures of about 200^{o} C and is capable of creating spots in less than 25 microseconds. Other laser beams, focused to one to ten micron beam diameters, are also capable of recording spots on optical storage media. The wavelength of the laser should be compatible with the recording material.

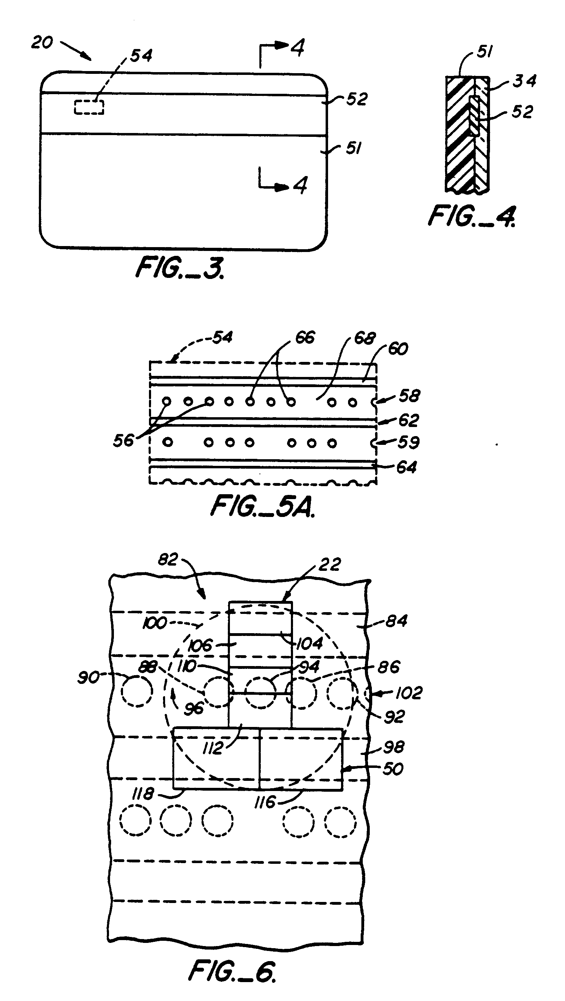

The second light source 16 is preferably a light emitting diode (LED), and is used for reading data spots on the card 20 and for tracking, clocking and focusing. The LED 16 emits the low intensity second beam 18 during both reading and writing. The second light source 16 may also be a defocused laser 23, as shown in Figure 2.

The laser beam 14 is directed through a lens 24 to a polarizing beam splitter 26. The beam 18 from the LED 16 is directed through a lens 28 to the beamsplitter 26. The beams 14 and 18 entering the beamsplitter 26 emerge as a combined beam sharing a slightly displaced optical axis 35. The combined beam on the axis 35, which beam is made up of the low intensity beam 18 and the laser beam 14 at high power during data writing and low or zero power during data reading, is directed through a focusing lens 32 onto the card 20. The card 20 is typically provided with a transparent scratch resistant protective coating 34 disposed on the data storage medium on the card. The lens 32 has a focal length so as to bring the laser beam 14 to a narrow spot, such as one to ten micrometers in diameter, on the card 20. The lens 32 typically has a three to four millimeter focal length. The beam 18 does not focus to a narrow spot but rather illuminates a substantially larger area of the medium on the card 20 than the beam 14. Typically, the beam 18 illuminates an area ranging from a 10 micrometer diameter up to a 60 micrometer diameter. The beam 18 may be elliptical.

The card 20 is supported on a platform 36 movable in a direction indicated by arrow A. Notion of the platform 36 provides a coarse scanning in a longitudinal direction along data tracks on the medium on the card 20. The system 10 is movable in a direction in and out of the page for coarse scanning in a lateral direction across the data tracks. Fine scanning may be provided by moving one or more optical elements in the system 10, such as the lens 32. Alternatively, data may be recorded onto and read from a disc 37, shown in Figure 2, rotatable in a direction indicated by arrow B.

Light illuminating the medium on the card 20 is reflected from the medium and scattered or absorbed by data spots or prerecorded information on the medium. Light scattered or absorbed from the spots contrasts with the light reflected from the surrounding field where no spots exist. The light is then directed to the at least one detector 22 by the lens 32, a mirror 38, and a lens 42. The lens 32 is shown off-centre with respect to the optical path 35 so that reflected light returns through the lens 32 along a separate optical path 44. This allows a non-polarization sensitive tracking and focusing system to be used thereby to reduce the cost of the medium. Alternatively, the lens 32 may be centred with respect to the optical axis 35, as shown in Figure 2, with reflected light being directed along the optical path 44 to the detector 29 by a quarterwave plate 41 and a beamsplitter 45.

The focal length of the lens 42 is determined by the size and configuration of the detector 22, and vice versa. The spot on the media should be imaged onto detector elements of the detector 22. The magnification of a spot is determined by the focal lengths of the lenses 32 and 42. Preferably, the focal length of the lens 42 is about 10mm, but lenses have been used with a focal length as long as 360mm. In that case, a plurality of turning mirrors, represented by the mirror 46, are generally provided to fold the optical path 44 into a compact structure. No such turning mirrors 46 are required for lenses 42 having a focal length of about 10mm.

With reference to Figure 2, an optical data reading and writing system 11 illustrates alternate features of the system 10 of Figure 1. A defocused laser 23 may be used as the second light source in place of an LED. The laser 23 emits a beam 17 which is generally brighter than an LED, but still below the threshold for writing data on the medium. Thus, the laser 23 has an advantage that the detector 29 and a detector 49 need not be as sensitive as the detector 22 in Figure 1. Typically, the laser 23 does not illuminate as large an area of the medium on the disc 37 as an LED, so alignment of the beam 17 with data spots on the disc 37 and with the detectors 29 and 49 is more critical for the defocused laser 23 than for the LED 16 of Figure 1.

A laser 13 is a first light source, generally identical to the laser 12 in Figure 1, and emits a beam 15. The beam 15 is directed through a lens 21 to a polarizing beamsplitter 25. The beam 17 is also directed through a lens 27 to the beamsplitter 25 where the beams 15 and 17 are combined and emerge on the common optical axis 35. The combined beams then pass through the polarizing beamsplitter 45 and the lens 32 to a recording medium on the disc 37. The disc 37 is turnable about its centre 39 in a direction indicated by arrow B. The disc 37 may also be turnable in the opposite direction.

The lens 32 is centred with respect to the optical axis 35, instead of off-centre as in Figure 1. Light shone on the disc 37 returns along the same path 35 as the incident beam and is then directed along the optical path 44 toward the detectors 29 and 49 by the beam splitter 45. A higher data density may be recorded and resolved with this lens-centred arrangement than with the off-centre arrangement in Figure 1.

In Figure 2, a beamsplitter 40 in the optical path 44 between the beamsplitter 45 and a lens 43 directs part of the reflected light to the second photodetector 49, and part of the light through the lens 43 to the first photodetector 29. The detector 49 is used for autofocus, and may be any of the detectors used for focusing which are known in the art. The detector 29 reads data by detecting light reflected, less scattering and absorption, from the medium of the disc 37. Except where noted, the detector 29 is like the detector 22 of Figure 1 described in more detail below.

In Figures 3 and 4, a data card 20 is illustrated having a size common to most credit cards. The width dimension of such a card is approximately 54mm and the length dimension is approximately 85mm. These dimensions are not critical, but preferred because such a size easily fits into a wallet and has historically been adopted as a convenient size for automatic teller machines and the like. The card's base 51 is a dielectric, usually a plastics material such as polyvinyl chloride or similar material. Polycarbonate plastics is preferred.

The surface finish of the base should have low specular reflectivity, preferably less than 10%. The base 51 carries a strip 52. The strip 52 is about 15 millimeters wide and extends the length of the card 20. Alternatively, the strip may have other sizes and orientations. The strip is relatively thin, approximately 100-500 microns, although this is not critical. The strip may be applied to the card by any convenient method which achieves flatness. The strip is adhered to the card with an adhesive and covered by the protective coating 34 such as a transparent laminated coating 34 such as a transparent laminating sheet which serves to keep the strip 52 flat, as well as protecting the strip from dust and scratches. The sheet 34 is a thin, transparent plastic sheet laminating material or a coating, such as a transparent lacquer. The sheet 34 is typically about 380 micrometers thick. The material is preferably made of polycarbonate plastic.

The opposite side of the base 51 may have user identification indicia embossed on the surface of the card. Other indicia such as card expiration data, card number and the like may be optionally provided.

The high resolution laser recording material which forms the strip 52 or which coats the disc 37 in Figure 2 may be any of the reflective recording materials which have been developed for use as optical discs, so long as the materials can be formed on thin substrates. Direct-read-after-write (DRAW) materials are easier to use with the data recording systems in Figures 1 and 2, since the detector 22 or 29 follows the write beam 14 or 15, facilitating checking of data recording. An advantage of reflective materials over transmissive materials is that the read/write equipment is all on one side of the card and automatic focus is easier. For example, the high resolution material described in Patent Specification US-A-4 230 939 issued to de Bont, et al teaches a thin metallic recording layer of reflective metals such as Bi, Te, In, Sn, Cu, Al, Pt, Au, Rh, As, Sb, Ge, Ga. Materials which are preferred are those having high reflectivity and low melting point, particularly Cd, Sn, Tl, In, Bi and amalgams. Suspensions of reflective metal particles in organic colloids also form low melting temperature laser recording media. Silver is one such metal. Typical recording media are described in our Patent Specifications US-A-4 314 260, US-A-4 298 684, US-A-4 278 758, US-A-4 278 756, US-A-4 269 917, US-A-4 284 716 and US-A-4 312 938.

The laser recording material which is selected should be compatible with the laser which is used for writing on it. Some materials are more sensitive than others at certain wavelengths. Good sensitivity to infrared light is preferred because infrared is affected least by scratches and dirt on the transparent laminating sheet. The selected recording material should have a favourable signal-to-noise ratio and form high contrast data bits which the read/write system with which it is used.

The material should not lose data when subjected to temperatures of about 82° C (180° F) for long periods. The material should also be capable of recording at speed of at least several thousand bits/sec. This generally precludes the use of materials that require long heating times or that rely on slow chemical reactions in the presence of heat, which may permit recording of only a few bits/sec. A large number of highly reflective laser recording materials have been used for optical data disc applications.

Data is recorded by forming spots in the surrounding field of the reflective layer itself, thereby altering the reflectivity in the data spot. Data is read by detecting the optical reflective contrast between the surround reflective field of unrecorded areas and the recorded spots.

Spot reflectivity of less than half the reflectivity of the surrounding field produces a contrast ratio of at least two to one, which is sufficient contrast for reading. Greater contrast is preferred. Reflectivity of the strip field of about 50% is preferred with reflectivity of a spot in the reflective field bring less than 10%, thus creating a contrast ratio of greater than five to one. Alternatively, the data may also be recorded by increasing the reflectivity of the strip. For example, the recording laser can melt a field of dull microscopic spikes on the strip to create flat shiny spots. This method is described in SPIE, Vol 329, Optical Disk Technology (1982), p 202. A spot reflectivity of more than twice the surrounding spiked field reflectivity produces a contrast ratio of at least two to one, which is sufficient contrast for reading.

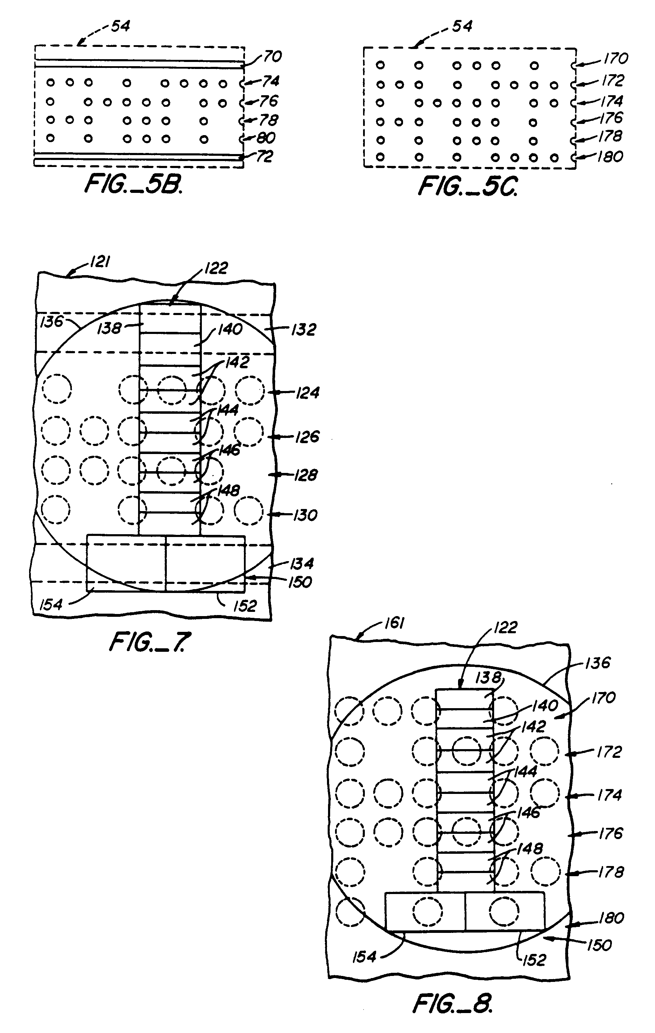

With reference to Figure 5a, a magnified view of laser writing on the laser recording material strip 52 may be seen. The dashed line 54 corresponds to the dashed line 54 in Figure 3. The strip 52 has laser recorded data spots 56 and clock spots 66, and prerecorded information thereon. The data spots 56 and the clock spots 66 are aligned in spaced apart parallel data paths 58 and 59. The prerecorded information comprises reference position information, such as a plurality of parallel tracking lines 60, 62 and 64. Such information is used to generate position error signals used as feedback in motor control. Data may also be recorded on the prerecorded tracking lines. Program instructions may also be prerecorded for the system to record and read data at particular locations. Each of the various industries, that is, medical, personal, financial and insurance, has formats specific to its particular needs. Patent Specification US-A-4 304 848 described how formatting may be done photographically. Formatting may also be done using laser recording of the tracking lines 60, 62 and 64, the clock spots 66 and other prerecorded information. Alternatively, preformatted tracking lines 60, 62 and 64 may be absent, as in Figure 5c, and the laser recorded data spots 56 used for tracking.

In Figure 5a, the laser recorded or preformatted clock spots 66 are equally spaced in the data path 58. The laser recorded or preformatted data spots 56 are located in the data path 58 between the clock spots 66. Presence of one of the data spots 56 between any two clock spots may be used to indicate a 1 bit, while absence of a data spot, such as in a vacant area 68, may be used to indicate a 0 bit. Other encoding schemes and formats may also be used. For instance, timing marks such as the clock spots 66 may be located on a separate clock track, or may be integrated into the track lines. Figure 5a shows only one data track 58 between a pair of adjacent track lines 60 and 62. Likewise, the data path 59 is the only data path between the servo track lines 62 and 64. The track lines are spaced 2 to 30 micrometers apart depending on the laser recorded spot size. For a 5 micron diameter laser recorded spot, servo track lines are typically spaced 15 microns apart. More than one data path may be disposed between adjacent servo track lines when the track lines are spaced further apart. In Figure 5b, track lines 70 and 72 are spaced about ten laser spot diameters apart with four data paths 74, 76, 78 and 80 therebetween. In Figure 5c, track lines are completely absent, and only data paths 170, 172, 174, 176, 178 and 180 are shown.

With reference to Figure 6, an image 82 of part of the medium on the card 20 is focused on the detectors 22 and 50. The detectors 22 and 50 are shown as being connected as far as the image 82 is concerned, but need not be physically connected. The detector 22 reads a servo track line 84 for tracking and a data path 102 containing laser recorded or preformatted clock spots 86, 88 and 90 sequentially for timing reference, and the laser recorded or preformatted data spots 92 and 94. A vacant area 96 between the clock spots 88 and 90 is also read as a data bit. The detector 50 reads a track line 98 for focusing, as will be explained below. The focusing detector may, alternatively, follow a data track, as seen in Figure 8. The detector 29 in Figure 2 is like the detector 22 without the focusing detector 50. Instead, a separate focusing detector 49 is provided.

A wide beam illuminates a large area of the medium. At least the area 100, defined by a dashed line circle, including portions of the track lines 84 and 98 and the data path 102 therebetween is illuminated, so that light is reflected or scattered from the medium for reading by the detectors 22 and 50. The detectors 22 and 50 are typically multiple element linear arrays of photodiodes. The detector 22 in Figure 6, for example, comprises detector elements 104, 106, 110 and 112.

The detector elements 104 and 106 both detect light from the medium reflected, scattered, absorbed or otherwise modified by the track line 84. Electrical signals from the elements 104 and 106 are subtracted to produce a track error signal for feedback and servo motor control. When the detector 22 is "on track", the detector elements 104 and 106 detect an equal amount of light thereby producing a zero amplitude error signal. When the detector 22 is "off track", one or the other of the detector elements 104 and 106 will receive a greater amount of light thereby producing an error signal indicative of the amount and direction of mistracking.

The detector element 110 and 112 detect light reflected, less the light scattered or absorbed from the data path 102. Electrical signals from the elements 110 and 112 are added to produce a data and clock signal. Alternatively, a single detector element may be used to detect the data path 102. As the medium is scanned, different spots on the data track are sequentially read.

The detector 50 comprises detector elements 116 and 118. Each such detector element may comprise either a single photodiode or a composite of several photodiodes whose electrical signals are added together. The detector elements 116 and 118 both detect light reflected, less the light scattered or absorbed, from the tracking line 98. Electrical signals from the elements 116 and 118 are subtracted to produce a focus error signal for autofocus feedback and control. As the system in Figure 1, with the off-centre focusing lens 32, is brought in and out of focus, the image of the illuminated portion of the tracking line 98 shifts from one detector element to the other. When the system is "in focus", the elements 116 and 118 receive an equal amount of light thereby producing a zero amplitude error signal. When the system is "out of focus", one or the other of the detector elements 116 and 118 will receive a greater amount of light thereby producing a focus error signal indicative of the distance and direction to the focus position.

In Figure 7, an image 121 of the medium on the card 20 is focused on detectors 122 and 150. The data on the medium is arranged according to the format in Figure 5b. Four data paths 124, 126, 128 and 130 are present between pairs of adjacent tracking lines 132 and 134. A large area beam illuminates a large area 136 of the medium including at least portions of the tracking lines 132 and 134 and each of the four data tracks 124, 126, 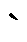 18 and 130 detected by the detectors 122 and 150. Although, the detectors 122 and 150 are shown as being connected as far as the image 121 is concerned, they need not be actually physically connected.

The detectors 122 and 150 are typically multiple element linear arrays of photodiode elements, like the detectors 22 and 50 in Figure 6. The detector 122 comprises a pair of elements 138 and 140 whose signals are subtracted to produce a tracking error signal and four elements or pairs of elements 142, 144, 146 and 148 for reading the data paths 124, 126, 128 and 130 respectively. The detector 150, like the detector 50 in Figure 6, has two detector elements 152 and 154 which produce a focus error signal.

In Figure 8, an image 161 of the medium of the card 20 is focused on the detectors 122 and 150. The data on the medium is arranged according to the format in Figure 5c and six data paths 170, 172, 174, 176, 178 and 180 may be seen. A beam illuminates a large area 136 including portions of each of the six data paths detected by the detectors 122 and 150.

The detectors 122 and 150 shown are the same as those in Figure 7 but the detectors 22 and 50 in Figure 6 may also be used. The detectors 122 and 150 are capable of reading more tracks simultaneously than the detectors 22 and 50. The detector 122 comprises pairs of elements, such as the elements 138 and 140. Four other pairs of elements 142, 144, 146 and 148 are also shown. Each pair of elements reads one of the data paths 170, 172, 174, 176 or 178. Signals from one pair of elements, such as the elements 138 and 140, may be subtracted to produce a tracking error signal. The detector 150 has the two detector elements 152 and 154 which produce a focus error signal. Other autofocus detectors known in the art may also be used. In this manner, a light beam with a large illumination area is used for both reading data paths, as well as prerecorded information.

## Claims

1. An optical data reading and writing system (10, 11) comprising,
a first light source (12, 13) provided for recording and comprising a laser capable of emitting a modulated laser beam (14, 15),
a second light source (16, 23) provided for reading and emitting a second beam (18, 17),
means (32) for simultaneously directing and operating said modulated laser beam (14, 15) and said second beam (18, 17) onto an optical data storage medium (20, 37) having prerecorded information (60, 62, 64, 70, 72) thereon, said laser beam (14, 15) recording data spots (56, 92, 94) of a uniform size which is less than about ten micrometers, said prerecorded information and said data spots being organised into a plurality of tracks (58, 59, 74 to 80, 170 to 180), and
means (22, 29) for reading said prerecorded information (60, 62, 64, 70, 72) and recorded data spots (56, 92, 94) from said medium.
characterized in that said second beam (18, 17) has a width simultaneously illuminating at least two of the tracks and has an illuminating area (100, 136) substantially larger than the area illuminated by said laser beam 14, 15).

2. A system according to claim 1, wherein said second light source (16) is an LED.

3. A system according to claim 1, wherein said second light source (23) is a defocused laser.

4. A system according to claim 1, wherein said prerecorded information comprises a plurality of parallel track lines (60, 62, 64. 70, 72), at least one data path (58, 59, 74 to 80) being disposed between each adjacent pair of said track lines, said prerecorded information further comprising a plurality of clock (66) and data (56) spots in said data paths.

5. A system according to claim 1, wherein said first (12, 13) and second (16, 23) light sources share a common optical axis.

6. A system according to claim 1, wherein said optical data storage medium (20, 37) is a direct-read-after-write medium, said light source for reading (16, 23) following said laser beam (14, 15) for checking recorded data spots relative to said prerecorded information.

7. A system according to claim 1, wherein said reading means comprises a photodetector (22, 50, 122, 150) receiving light reflectively scattered from said illuminated area (100, 136) of said medium (20, 37), said photodetector (22, 29) having a plurality of detector elements (104 to 112, 138 to 154), some of said elements reading prerecorded information, some other of said elements reading data spots.

8. A system according to claim 7, wherein said prerecorded information comprises a plurality of parallel track lines (60, 62, 64, 84, 98, 132, 134), at least one data path (102, 124 to 130, 170 to 180) having laser recorded data spots (92, 94) being disposed between each adjacent pair of said track lines, said plurality of detector elements of said photodetector being divided into pairs of elements for each track line and each data path.

9. A system according to claim 8, wherein said pair of elements on a track line provide information for servo tracking by a difference between signals from said pair of elements.

10. A system according to claim 8, wherein said pair of elements on each data path provide a data and clocking signal by summation.

11. A system according to claim 1, including means (36) for supporting a card (20) having the optical data storage medium disposed thereon so as to allow optical reading of and writing on the card (20).

12. A system according to claim 11, wherein said second light source (16) is an LED.

13. A system according to claim 12, wherein at least some of said prerecorded information is illuminated along with said data paths, said prerecorded information comprising tracking information.

14. A system according to claim 11, wherein said second light source (23) is a defocused laser.

15. A system according to claim 11, wherein a plurality of said data paths are illuminated simultaneously by said second beam (18, 17).

16. A system according to claim 11, wherein said optical data storage medium is a direct-read-after-write medium, said reading means following said laser beam for checking recorded data spots relative to said prerecorded information.

17. A system according to claim 11, wherein said reading means comprises a photodetector (22, 50, 122, 150) positioned to receive light reflectively scattered from said illuminated area (100, 136) of said card (20) medium, said photodetector having a plurality of detector elements (104 to 112, 138 to 154), some of said elements being capable of reading prerecorded information, some other of said elements being capable of reading data spots.

18. A system according to claim 17, wherein said prerecorded information comprises a plurality of parallel track lines, at least one of the data paths having laser recorded data spots being disposed between each adjacent pair of track lines, said plurality of detector elements being divided into pairs of elements for each track line and each data path.

19. A system according to claim 18, wherein said pair of detector elements on a track line provide information for servo tracking by a difference between signals from said pair of elements, and a second pair of said detector elements on a track line provide information for auto focusing by a difference between signals from said second pair of elements.

20. A system according to claim 18, wherein said pair of detector elements on a data path provide a data and clocking signal by summation.

## Patentansprüche

1. Optisches Datenablese- und -aufzeichnungssystem (10, 11) mit
einer ersten Lichtquelle (12, 13), die zur Aufzeichnung vorgesehen ist und einen Laser umfaßt, der in der Lage ist, einen modulierten Laserstrahl (14, 15) zu emittieren,
einer zweiten Lichtquelle (16, 23), die zur Ablesung vorgesehen ist und einen zweiten Strahl (18, 17) emittiert,
Einrichtungen (32), die gleichzeitig den modulierten Laserstrahl (14, 15) und den zweiten Strahl (18, 17) handhaben und auf ein optisches Datenspeichermedium (20, 37) mit voraufgezeichneter Information (60, 62, 64, 70, 72) darauf richten, wobei der Laserstrahl (14, 15) Datenpunkte (56, 92, 94) gleichmäßiger Größe aufzeichnet, die geringer als etwa 10 Mikrometer ist, und wobei die voraufgezeichnete Information und die Datenpunkte in mehreren Bahnen (58, 59, 74 bis 80, 170 bis 180) arrangiert werden, und
Einrichtungen (22, 29) zur Ablesung der voraufgezeichneten Information (60, 62, 64, 70, 72) und aufgezeichneten Datenpunkte (56, 92, 94) von dem Medium,
**dadurch gekennzeichnet**, daß der zweite Strahl (18, 17) eine Breite besitzt, die im wesentlichen wenigstens zwei der Bahnen beleuchtet, und eine Beleuchtungsfläche (100, 136) hat, die wesentlich größer als die von dem Laserstrahl (14, 15) beleuchtete Fläche ist.

2. System nach Anspruch 1, bei dem die Zweite Lichtquelle (16) ein LED ist.

3. System nach Anspruch 1, bei dem die zweite Lichtquelle (23) ein defokussierter Laser ist.

4. System nach Anspruch 1, bei dem die voraufgezeichnete Information mehrere parallele Bahnlinien (60, 62, 64, 70, 72) umfaßt, wobei wenigstens ein Datenweg (58, 59, 74 bis 80) zwischen jedem nachbarlichen Paar der Bahnlinien angeordnet ist und wobei die voraufgezeichnete Information weiterhin mehrere Taktpunkte (66) und Datenpunkte (56) in den Datenwegen umfaßt.

5. System nach Anspruch 1, bei dem die erste (12, 13) und zweite (16, 23) Lichtquelle Anteil an einer gemeinsamen optischen Achse haben.

6. System nach Anspruch 1, bei dem das optische Datenspeichermedium (20, 37) ein Nachaufzeichnung-Direktablesemedium ist, wobei die Lichtquelle für das Ablesen (16, 23) dem Laserstrahl (14, 15) folgt, um aufgezeichnete Datenpunkte in Bezug auf die voraufgezeichnete Information zu sichern.

7. System nach Anspruch 1, bei dem die Ableseeinrichtung einen Photodetektor (22, 50, 122, 150) umfaßt, der durch Reflexion von der beleuchteten Fläche (100, 136) des Mediums (20, 37) gestreutes Licht empfängt, wobei der Photodetektor (22, 29) mehrere Detektorelemente (104 bis 112, 138 bis 154) hat und wobei einige dieser Elemente voraufgezeichnete Information ablesen und andere dieser Elemente Datenpunkte ablesen.

8. System nach Anspruch 7, bei dem die voraufgezeichnete Information mehrere parallele Bahnlinien (60, 62, 64, 84, 98, 132, 134) umfaßt, wobei wenigstens ein Datenweg (102, 124 bis 130, 170 bis 180) durch Laser aufgezeichnete Datenpunkte (92, 94) hat, die jeweils zwischen einem nachbarlichen Paar der Bahnlinien angeordnet sind, wobei die mehreren Detektorelemente des Photodetektors in Paare von Elementen für jede Bahnlinie und jeden Datenweg aufgeteilt sind.

9. System nach Anspruch 8, bei dem das Paar von Elementen auf einer Bahnlinie Information für Servospurführung durch einen Unterschied zwischen Signalen von diesem Paar von Elementen vorsieht.

10. System nach Anspruch 8, bei dem das Paar von Elementen auf jedem Datenweg ein Daten- und Taktsignal durch Summierung vorsieht.

11. System nach Anspruch 1 mit Einrichtungen (36) zur Unterstützung einer Platte (20) mit einem darauf angeordneten optischen Datenspeichermedium, um eine optische Ablesung von der Platte (20) und einer Aufzeichnung auf ihr zu gestatten.

12. System nach Anspruch 11, bei dem die zweite Lichtquelle (16) ein LED ist.

13. System nach Anspruch 12, bei dem wenigstens einige der voraufgezeichneten Information zusammen mit den Datenwegen beleuchtet wird, wobei diese voraufgezeichnete Information Spurführungsinformation umfaßt.

14. System nach Anspruch 11, bei dem die zweite Lichtquelle (23) ein defokussierter Laser ist.

15. System nach Anspruch 11, bei dem mehrere der Datenwege gleichzeitig durch den zweiten Strahl (18, 17) beleuchtet werden.

16. System nach Anspruch 11, bei dem das optische Datenspeichermedium ein Nachaufzeichnung-Direktablesemedium ist, wobei die Ableseeinrichtung dem Laserstrahl folgt, um aufgezeichnete Datenpunkte in Bezug auf die voraufgezeichnete Information zu sichern.

17. System nach Anspruch 11, bei dem die Ableseeinrichtung einen Photodetektor (22, 50, 122, 150) umfaßt, der so angeordnet ist, daß er durch Reflexion von der beleuchteten Fläche (100, 136) des Platten (20)-Mediums gestreutes Licht empfängt, wobei der Photodetektor mehrere Detektorelemente (104 bis 112, 138 bis 154) hat, wobei einige dieser Elemente voraufgezeichnete Information ablesen können und andere dieser Elemente Datenpunkte ablesen können.

18. System nach Anspruch 17, bei dem die voraufgezeichnete Information mehrere parallele Bahnlinien umfaßt, wobei wenigstens einer der Datenwege durch Laser aufgezeichnete Datenpunkte hat, die zwischen jedem nachbarlichen Paar von Bahnlinien angeordnet sind, wobei die mehreren Detektorelemente in Paare von Elementen für jede Bahnlinie und jeden Datenweg aufgeteilt sind.

19. System nach Anspruch 18, bei dem das Paar von Detektorelementen auf einer Bahnlinie Information für Servospurführung durch einen Unterschied zwischen Signalen von dem Paar von Elementen liefert und ein zweites Paar der Detektorelemente auf einer Bahnlinie Information für Selbstfokussierung durch einen Unterschied zwischen Signalen von dem zweiten Paar von Elementen liefert.

20. System nach Anspruch 18, bei dem das Paar von Detektorelementen auf einem Datenweg ein Daten- und Taktsignal durch Summierung liefert.

## Revendications

1. Système optique de lecture et d'écriture de données (10, 11) comprenant :
une première source de lumière (12, 13) prévue pour l'enregistrement et comprenant un laser capable d'émettre un faisceau laser modulé (14, 15) ;
une seconde source de lumière (16, 23) prévue pour la lecture et émettant un second faisceau (18, 17) ;
un moyen (32) pour diriger et mettre en oeuvre simultanément ledit faisceau modulé (14, 15) et ledit second faisceau (18, 17) sur un support de mémorisation optique de données (20, 37) portant de l'information préenregistrée (60, 62, 64, 70, 72), ledit faisceau laser (14, 15) enregistrant des taches de données (56, 92, 94) d'une dimension uniforme qui est plus petite qu'environ dix micromètres, ladite information préenregistrée et lesdites taches de données étant organisées en une pluralité de pistes (58, 59, 74 à 80, 170 à 180) ; et,
un moyen (22, 29) pour la lecture, sur ledit support, de ladite information préenregistrée (60, 62, 64, 70, 72) et des taches de données enregistrées (56, 92, 94) ;
caractérisé en ce que ledit second faisceau (18, 17) a une largeur éclairant simultanément au moins deux des pistes et a une superficie d'éclairement (100, 136) sensiblement plus grande que la superficie éclairée par ledit faisceau laser (14, 15).

2. Système selon la revendication 1, dans lequel ladite seconde source de lumière (16) est une LED (diode émettrice de lumière).

3. Système selon la revendication 1, dans lequel ladite seconde source de lumière (23) est un laser dfocalisé.

4. Système selon la revendication 1, dans lequel ladite information préenregistrée comprend une pluralité de lignes de suivi de piste parallèles (60, 62, 64, 70, 72), au moins un trajet de données (58, 59, 74 à 80) étant placé entre chaque paire adjacente desdites lignes de suivi de piste, ladite information préenregistrée, comprenant en outre une pluralité de taches de synchronisation (66) et de données (56) dans lesdits trajets de données.

5. Système selon la revendication 1, dans lequel lesdites première (12, 13) et seconde (16, 23) sources de lumière partagent un axe optique commun.

6. Système selon la revendication 1, dans lequel ledit support de mémorisation optique de données (20, 37) est un support à lecture directe après écriture, ladite source de lumière pour la lecture (16, 23) suivant ledit faisceau laser (14, 15) pour contrôler les taches de données enregistrées par rapport à ladite information préenregistrée.

7. Système selon la revendication 1, dans lequel ledit moyen de lecture comprend un photodétecteur (22, 50, 122, 150) recevant de la lumière diffusée de manière réfléchie à partir de ladite zone éclairée (100, 136) dudit support (20, 37), ledit photodétecteur (22, 29) comportant une pluralité d'éléments détecteurs (104 à 112, 138 à 154), certains desdits éléments lisant l'information préenregistrée, certains autres desdits éléments lisant des taches de données.

8. Système selon la revendication 7, dans lequel ladite information préenregistrée comprend une pluralité de lignes de suivi de piste parallèles (60, 62, 64, 84, 98, 132, 134), au moins un trajet de données (102, 124 à 130, 170 à 180), comportant des taches de données enregistrées au laser (92, 94), étant placé entre chaque paire adjacente desdites lignes de suivi de piste, ladite pluralité d'éléments détecteurs dudit photodétecteur étant divisée en paires d'éléments pour chaque ligne de suivi de piste et chaque trajet de données.

9. Système selon la revendication 8, dans lequel ladite paire d'éléments sur une ligne de suivi de piste fournit de l'information pour l'asservissement de suivi de piste par une différence entre des signaux provenant de ladite paire d'éléments.

10. Système selon la revendication 8, dans lequel ladite paire d'éléments sur chaque trajet de données fournit un signal de données et de synchronisation par sommation.

11. Système selon la revendication 1, incluant un moyen (36) pour supporter une carte (20), portant le support de mémorisation optique de données de façon à permettre la lecture et l'écriture optique de la carte (20).

12. Système selon la revendication 11, dans lequel ladite seconde source de lumière (16) est une LED.

13. Système selon la revendication 12, dans lequel au moins une certaine partie de ladite information préenregistrée est éclairée en même temps que lesdits trajets de données, ladite information préenregistrée comprenant l'information de suivi de piste.

14. Système selon la revendication 11, dans lequel ladite seconde source de lumière (23) est un laser défocalisé.

15. Système selon la revendication 11, dans lequel une pluralité desdits trajets de données sont éclairés simultanément par ledit second faisceau (18, 17).

16. Système selon la revendication 11, dans lequel ledit support de mémorisation optique de données est un support à lecture directe après écriture, ledit moyen de lecture suivant ledit faisceau laser pour contrôler les taches de données enregistrées par rapport à ladite information préenregistrée.

17. Système selon la revendication 11, dans lequel ledit moyen de lecture comprend un photodétecteur (22, 50, 122, 150) placé pour recevoir de la lumière diffusée de manière réfléchie à partir de ladite zone éclairée (100, 136) dudit support carte (20), ledit photodétecteur comportant une pluralité d'éléments détecteurs (104 à 112, 138 à 154), certains desdits éléments étant capables de lire l'information préenregistrée, certains autres desdits éléments étant capables de lire des taches de données.

18. Système selon la revendication 17, dans lequel ladite information préenregistrée comprend une pluralité de lignes de suivi de piste parallèles, au moins un trajet de données, comportant des taches de données enregistrées au laser, étant placé entre chaque paire adjacente desdites lignes de suivi de piste, ladite pluralité d'éléments détecteurs étant divisée en paires d'éléments pour chaque ligne de suivi de piste et chaque trajet de données.

19. Système selon la revendication 18, dans lequel ladite paire d'éléments sur une ligne de suivi de piste fournit de l'information pour l'asservissement de suivi de piste par une différence entre des signaux provenant de ladite paire d'éléments, et dans lequel une seconde paire desdits éléments détecteurs sur une ligne de suivi de piste fournit l'information pour la focalisation automatique par une différence entre des signaux provenant de ladite seconde paire d'éléments.

20. Système selon la revendication 18, dans lequel ladite paire d'éléments détecteurs sur un trajet de données fournit un signal de données et de synchronisation par sommation.
